# DEMANDE DE BREVET EUROPEEN

(11) **EP 0 621 246 A1**
(43) Date de publication de la demande: **26.10.1994**
(21) Numéro de dépôt: 94400849.9
(22) Date de dépôt: 19.04.1994
(51) Int. Cl.: C03C 17/02

(54) **Articles de verre comportant du plomb, notamment récipients en cristal revêtus d'une couche barrière de verre amorphe et procédé de réalisation de tels articles**

(30) Priorité: 20.04.1993 FR 9304624
(71) Demandeur: METALEUROP S.A., F-94120 Fontenay-sous-Bois (FR)
(72) Inventeur: Perrier, Elisabeth, F-78310 Maurepas (FR); Thomas, Christian, F-75020 Paris (FR); Vaca, Jean-Michel, F-38420 Domene (FR); Deschanvres, Jean-Luc, F-38600 Meylan (FR); Joubert, Jean-Claude, F-38610 Venon (FR)
(74) Mandataire: Martin, Jean-Jacques

(57) **Abrégé**

La présente invention concerne des articles de verre comportant du plomb, notamment un récipient en cristal de plomb. La surface destinée à entrer en contact avec un corps extérieur est revêtue d'une mince couche de verre binaire de structure amorphe formée d'un mélange d'oxyde de métal et d'un oxyde d'un élément associé formateur du verre, ladite couche étant résistante aux agents chimiques, tout en formant barrière au plomb dans les conditions usuelles d'utilisation.

L'invention a également pour objet un procédé de réalisation de tels articles.

## Description

La présente invention concerne d'une façon générale des articles en verre comportant du plomb, revêtus sur la face qui est destinée à entrer en contact avec une autre substance d'une couche barrière empêchant la migration du plomb.

Elle concerne plus particulièrement des récipients ou analogues en cristal de plomb revêtus sur leur face interne d'une couche barrière empêchant la migration du plomb vers leur contenu.

Elle concerne également un procédé de réalisation desdits articles ou récipients.

Le cristal de plomb est depuis longtemps apprécié pour son éclat et sa densité, et est utilisé tout particulièrement pour contenir des produits liquides, alimentaires ou autres. Il est utilisé traditionnellement pour réaliser des verres, coupes, carafes, etc. destinés à recevoir des boissons pendant des durées assez courtes.

De nos jours on utilise le cristal de plomb comme matériau de conditionnement commercial pour des liquides alimentaires, notamment vins et spiritueux (cognac, whisky, vins, etc.). Dans ce cas, et notamment avec des liquides relativement acides comme le vin, on a constaté qu'il se produisait à terme une dissolution de certains éléments contenus dans la matrice silicatée constitutive du cristal.

Ce phénomène de dissolution partielle n'est pas un phénomène spécifiquement lié au cristal de plomb. On le retrouve en effet de façon bien connue dans des verres alcalins ou alcalino-terreux, où il se produit une lixiviation par le liquide contenu dans le récipient et un échange entre les protons dudit liquide et les cations métalliques contenus dans le verre.

Mais la particularité du cristal réside dans sa forte teneur constitutive en oxyde de plomb. Ainsi, lors d'un contact prolongé avec un liquide, une fraction très faible, mais non négligeable, du plomb est susceptible de se dissoudre dans ledit liquide.

Une telle disposition est de nature à faire obstacle à l'utilisation de cristal de plomb pour les applications commerciales précitées, à cause de la toxicité qui pourrait en résulter pour les produits contenus.

Pour pallier cette difficulté, on connaît déjà dans la technique antérieure, notamment par les documents FR-A-2 627 768 et FR-A-2 632 628, une solution qui consiste à revêtir l'intérieur de récipients en cristal de plomb d'une fine couche de verre sans plomb. Cette couche forme une barrière à la migration du plomb contenu dans le cristal vers le liquide.

Cette solution présente cependant deux inconvénients. Tout d'abord le revêtement mince de verre sans plomb s'avère difficile à réaliser. En outre, un tel revêtement ne constitue pas une barrière absolue à la diffusion du plomb, ce qui peut s'expliquer par le fait que le réseau silicaté reste continu entre le cristal et le liquide, et qu'on peut assister à une certaine migration du plomb à travers le réseau du verre.

On a également proposé dans le document FR-A-2 673 176 un procédé de réalisation d'un récipient en cristal consistant à déposer à la surface intérieure du récipient une mince couche d'un oxyde métallique transparent et conducteur de l'électricité.

Il s'avère néanmoins qu'en milieu acide la couche barrière ne présente pas une résistance tout à fait satisfaisante.

D'autre part, la structure cristalline de cette couche présente des zones plus fragiles (joints de grains) pouvant entraîner une diffusion préférentielle du plomb.

La présente invention vise à pallier ces inconvénients de la technique antérieure.

Dans le cadre de cet exposé, l'expression "articles de verre" couvre indifféremment les articles de verre au sens strict, ainsi que les glasures. Bien que la description qui va suivre soit plus particulièrement relative aux récipients en cristal de plomb, il doit être clair que l'invention n'est pas limitée à cette forme particulière de réalisation mais qu'elle s'étend au contraire à toutes les formes d'articles de verre comportant du plomb.

Compte tenu de la précision indiquée ci-dessus, l'objet principal de la présente invention est un récipient dont la surface intérieure est pourvue d'une couche barrière transparente de structure amorphe, non toxique, insoluble notamment vis-à-vis d'un liquide alimentaire ou autre destiné à être contenu dans le récipient, non poreuse et résistante à l'abrasion, notamment par les agents de lavage.

Un autre objet de la présente invention est un récipient présentant une couche barrière dont l'épaisseur puisse être ajustée à la demande, en particulier en vue d'obtenir une variété d'effets optiques allant de l'irisation interférentielle jusqu'à la neutralité optique parfaite.

Un autre objet de la présente invention est un récipient dont la couche barrière présente un coefficient d'expansion thermique très proche de celui du verre au plomb (SiO₂-PbO-K₂O) et une bonne adhérence sur ledit verre.

Dans une variante avantageuse, un autre objet de l'invention est un récipient dont la présence ou l'absence de la couche barrière peut être vérifiée aisément avec des moyens simples.

L'invention concerne à cet effet un article de verre comportant du plomb, notamment un récipient ou analogue en cristal de plomb caractérisé en ce que la surface destinée à entrer en contact avec un corps extérieur est revêtue d'une mince couche de verre binaire de structure amorphe formée d'un mélange d'oxyde de métal et d'un oxyde d'un élément associé formateur du verre, ladite couche étant résistante aux agents chimiques, tout en formant barrière au plomb dans les conditions usuelles d'utilisation.

L'invention concerne également un procédé de réalisation d'articles de verre comportant du plomb, notamment des récipients, caractérisé en ce qu'on dépose, sur la surface destinée à entrer en contact avec un corps extérieur, une mince couche telle que décrite ci-dessus faisant obstacle à la migration du plomb contenu dans l'article de verre vers l'extérieur.

Par couche résistante aux agents chimiques, on entend au sens de la présente invention, une couche de 1 µm d'épaisseur qui n'est pas affectée par la mise en contact de celle-ci avec un milieu acide acétique à 4 % en volume, à 25°C pendant 24 heures et après un cycle de lave-vaisselle traditionnel (1 heure en milieu alcalin).

Par couche formant barrière à la migration du plomb, on entend au sens de la présente invention, une couche qui empêche quasiment totalement la libération de plomb dans une solution d'acide acétique à 4% en volume à 25°C pendant 24 heures ou après un cycle de lave-vaisselle traditionnel (1 heure en milieu alcalin). Pratiquement, cette couche conduit aux mêmes résultats qu'une couche de cire déposée sur le récipient en cristal de plomb.

Par l'expression "verre binaire de structure amorphe", on entend un verre dont la structure ne présente pas de grains bien définis et donc de joints intergranulaires comme ceux existant dans les céramiques qui présentent une structure cristalline. La structure amorphe permet également d'éviter le phénomène de diffusion de la lumière dû aux grains, conduisant ainsi à une très bonne transparence de la couche.

De façon générale, le contenu du récipient est un liquide, notamment alimentaire. Néanmoins d'autres substances solides ou pâteuses peuvent également convenir.

En général, les couches selon l'invention ne comporte qu'un oxyde de métal et qu'un oxyde d'élément associé formateur du verre. On peut néanmoins, sans nuire à l'invention, utiliser des mélanges de ces oxydes.

Parmi les oxydes de l'élément associé formateurs du verre convenant pour la réalisation des couches, on peut citer notamment l'anhydride phosphorique (P₂O₅), le sesquioxyde de bore (B₂O₃), le sesquioxyde d'aluminium (Al₂O₃), le dioxyde de silicium (SiO₂), de préférence un oxyde de phosphore comme l'anhydride phosphorique.

L'épaisseur de la couche peut varier de façon sensible selon l'utilisation à laquelle l'article, notamment le récipient, est destiné. Toutefois cette couche aura avantageusement une épaisseur comprise entre 0,5 et 1,5 µm.

Selon un mode de réalisation préféré, l'oxyde métallique est choisi parmi le dioxyde de zirconium et ou le dioxyde de titane. Ces oxydes métalliques sont de préférence associés à un oxyde de phosphore, notamment l'anhydride phosphorique (P₂O₅).

Les proportions des différents oxydes peuvent varier dans un large intervalle. Toutefois, l'effet recherché est encore meilleur si l'on choisit un rapport en pourcentage en mole d'oxyde de métal par rapport au mélange total compris entre 30 et 80 %.

La stabilité de la structure vitrifiée amorphe telle que définie ci-dessus peut encore être améliorée par la présence d'un troisième élément, même en quantité très faible.

Parmi ces éléments, on citera le sodium, le potassium, le calcium, le magnésium qui sont en général des éléments connus comme "modificateurs" des verres.

Ces éléments modificateurs même en faible proportion contribuent à augmenter considérablement le coefficient d'expansion thermique en changeant donc de façon notable la structure locale du verre le rendant beaucoup plus proche de celui du verre au plomb. En conséquence, il est possible de réaliser des couches denses et bien adhérentes dont la dilatation est comparable à celle du substrat, permettant de résister ainsi aux chocs thermiques et aux tensions lors du refroidissement du verre.

Dans un mode préféré de réalisation, I'élément modificateur sera présent jusqu'à 10 % en mole.

Selon un aspect avantageux de la présente invention, la couche décrite ci-dessus résulte de la transformation d'un précurseur organométallique et d'un précurseur de l'oxyde de l'élément formateur associé et éventuellement d'un précurseur organique de l'élément modificateur.

Parmi les précurseurs organométalliques convenant pour la presente invention, on peut citer les sels organiques de métal tels que les anions d'acides organiques de métal comme l'acétyl acétonate et notamment l'acétylacétonate de zirconium ou de titane.

Parmi les précurseurs de l'oxyde de l'élément formateur associé, on peut citer les esters de ces composés et notamment le triphosphate de phényl.

Parmi les précurseurs de l'élément modificateur, on peut citer les sels organiques de ces éléments comme l'acétylacétonate de sodium. Ainsi, la mince couche obtenue résulte de la transformation d'un composé organo-métallique, précurseur de l'oxyde métallique correspondant, et d'un composé organique de l'élément associé correspondant.

Compte tenu de l'extrême souplesse en composition autorisée par la méthode d'élaboration à partir de précurseurs organiques, on peut varier à volonté la composition de la couche en ajoutant à côté des éléments formateurs, notamment le phosphore, d'autres éléments formateurs des verres.

On constate alors qu'une proportion même très faible de ces éléments contribue très largement à retarder les phénomènes de recristallisation et à "stabiliser" ainsi une phase amorphe bien transparente.

On a trouvé également qu'il était possible d'incorporer dans ces couches une faible proportion d'un élément répondant à une excitation fluorescente, par exemple une ou plusieurs terres rares. Cette réalisation permet de détecter très rapidement la présence ou l'absence de la couche barrière sur l'article de verre.

Selon un aspect particulier de l'invention, les articles de verre comportant du plomb, notamment les récipients en cristal de plomb, présentent donc une couche barrière telle que définie ci-dessus, comprenant en outre un élément susceptible de répondre à une excitation fluorescente, notamment un ou plusieurs terres rares.

Selon un autre aspect de la présente invention, un procédé de réalisation avantageux consiste à pyrolyser sur un article de verre comportant du plomb, notamment un cristal de plomb convenablement chauffé (en général à une température minimale de 400°C et pouvant aller jusqu'à 550°C) un brouillard (encore appelé aérosol) formé de gouttelettes microniques d'une solution contenant les précurseurs organométalliques de l'oxyde de métal, les précurseurs organiques de l'oxyde de l'élément associé et éventuellement les précurseurs de l'élément modificateur dissous dans un solvant organique.

La technique de dépôt d'une telle couche par pyrolyse est notamment décrite dans le document FR 2 151 809 auquel l'homme du métier pourra utilement se référer.

Parmi les solvants, on peut citer de façon non limitative les solvants protiques et aprotiques, de préférence polaires, comme les alcools aromatiques ou les cétones.

Le phénomène de nébulisation de l'aérosol peut s'effectuer, par exemple, par pulvérisation ultrasonore de la solution lorsque celle-ci est soumise à une intense sollicitation acoustique à l'aide d'une céramique piézoélectrique à fort rendement vibrant à la résonance aux alentours de 800 Khz. La taille des gouttelettes est en relation directe avec la fréquence d'excitation et se situe dans ce cas dans une fourchette de 2 à 4 microns, avec un spectre de distribution extrêmement resserré (par opposition avec les pulvérisations dites pneumatiques). L'aérosol est véhiculé vers la zone de dépôt à l'aide d'un gaz porteur à débit parfaitement calibré, permettant ainsi un contrôle précis de la quantité de solution pulvérisée.

Au voisinage immédiat du substrat, situé dans la zone de dépôt, l'aérosol est transformé en vapeur par le rayonnement infrarouge du substrat. Une arrivée d'air (ou d'oxygène) assure le bon contrôle de la réaction de pyrolyse, qui peut être considérée à ce niveau comme une méthode de CVD (dépôt chimique en phase vapeur). L'avantage de la méthode est de permettre d'apporter au voisinage même du substrat chauffé tous les constituants dans des proportions parfaitement contrôlées, leurs proportions relatives étant ajustées dans la solution de départ, sans se préoccuper de leurs tensions de vapeur respectives.

Avec les solvants utilisés dans le procédé, la température de pyrolyse se situe entre 400°C et 550°C, une température minimale de 400°C semblant nécessaire pour assurer une totale pyrolyse des espèces organiques. Au dessous de 400°C, on observe une présence non négligeable de carbone dans les couches déposées, même lorsque celles-ci apparaissent transparentes et de bonne qualité.

Pour améliorer l'homogénéité en épaisseur du dépôt pyrolysé à la surface des objets, notamment lorsque ceux-ci présentent des formes à surfaces fortement concaves, on travaillera dans un réacteur de pyrolyse sous pression réduite, typiquement entre 1 et 200 mbar. On constate alors que les couches obtenues sont bien transparentes et ne présentent pas des irrisations dues à la décompostion de la lumière caractéristiques des couches minces transparentes (0,5 à 1 µ) dont l'homogénéité d'épaisseur n'est pas assurée à mieux que 10 %.

Par ailleurs, on constate que les couches des articles selon l'invention, notamment celles obtenues par le procédé indiqué ci-dessus, résistent aux chocs thermiques et. aux tensions lors du refroidissement du substrat. L'absence de fissures et de craquelures de la couche après refroidissement est la preuve d'une bonne adaptation de coefficient d'expansion et d'une bonne adhérence de la couche sur le substrat.

Les exemples ci-après décrivent des modes de réalisation particuliers de la présente invention.

### Exemple 1

- Première étape : préparation de la solution
   On pèse successivement 3,052 g d'acétylacétonate de sodium, 4,875 g d'acétylacétonate de zirconium et 37,522 g de triphénylphosphate. Après mélange, ces poudres de précurseurs sont mises en solution dans 0,5 l d'un mélange équivolume d'acétylacétone et d'alcool benzylique. Après agitation et chauffage à 120°C pendant 4 heures, une solution limpide est obtenue.
- Deuxième étape : réalisation du dépôt
   La solution réalisée lors de la première étape est placée dans le système de production de l'aérosol avec comme débit une consommation de 150 cc/h. La pression dans l'enceinte de dépôt est maintenue à 200 torr. La température du système chauffant est régulée à 540°C avec comme débit d'injection d'air 5 I/min. Dans ces conditions au bout de 20 min, la couche transparente en verre obtenue par pyrolyse de l'aérosol sur le substrat en verre au plomb présente une épaisseur de 0,5 µm, parfaitement adhérente et exempte de fissures même après refroidissement.

### Exemple II

- Première étape : préparation de la solution
   On pèse successivement 9,002 g d'acétylacétonate de zirconium et 72,283 g de triphénylphosphate. Après mélange, ces poudres de précurseurs sont mises en solution dans 0,6 l d'un mélange équivolumique d'acétylacétone et d'alcool benzylique. Après agitation et chauffage à 120°C pendant 4 heures, une solution limpide est obtenue.
- Deuxième étape : réalisation du dépôt
   La solution élaborée lors de la première étape est placée dans le système de production de l'aérosol avec comme débit une consommation de 80 cc/h. La pression dans l'enceinte de dépôt est maintenue à la pression atmosphérique. La température du système chauffant est régulée à 525°C avec comme débit d'injection d'air 6 I/min. Dans ces conditions au bout d'une heure, la couche obtenue par pyrolyse de l'aérosol sur le substrat en verre au plomb présente une épaisseur de 0,5 µm, sans fissures apparentes (après refroidissement à température ambiante).

### Exemple III

### Tests de diffusion

Ces tests ont été effectués suivant la procédure décrite dans la norme française ISO 7086, c'est-à-dire par une mise en contact de l'échantillon avec une solution d'acide acétique à 4 % volume, à 25°C, pendant 24 heures, suivie de la mesure du plomb libéré dans la solution.

Des échantillons de cristal revêtu et non revêtu ont éte comparés. Sur chaque échantillon, une surface a été délimitée par de la cire pour définir l'aire de mise en contact avec la solution acétique. Une référence a été définie par un échantillon de cristal non revêtu, totalement recouvert de cire, pour évaluer l'influence de la cire sur la diffusion du plomb (par relargage ou par un problème d'étanchéité à l'interface cristal-cire).

Les résultats obtenus sont les suivants :

| | Surface exposée (cm²) | Plomb (µg/l) |
|---|---|---|
| Cristal tel quel | 28 | 820 |
| Cristal revêtu selon l'exemple 1 | 2 | 4 |
| Cristal revêtu selon l'exemple 2 | 2 | 5 |
| Référence | 0 | 4 |

On constate que le cristal revêtu ne relargue pas plus que la référence, et beaucoup moins que le cristal non revêtu, ce qui démontre bien l'effet barrière de la couche déposée.

### Exemple IV

### Tests de tenue chimique

Différents milieux ont été testés sur un récipient en cristal revêtu selon l'exemple 2.
- en milieu acide nitrique à 10 % en volume, à 40°C et après un contact pendant 10 minutes, on vérifie que la couche est restée intacte,
- en milieu acide acétique à 4 % en volume, à 25°C et après un contact pendant 24 heures, on vérifie également que la couche est restée intacte.
- Après un cycle de lave-vaisselle traditionnel (1 heure en milieu alcalin) on vérifie également que la couche est restée intacte.

## Revendications

1. Articles de verre comportant du plomb, notamment récipient en cristal de plomb, caractérisé en ce que la surface destinée à entrer en contact avec un corps extérieur est revêtue d'une mince couche de verre binaire de structure amorphe formée d'un mélange d'oxyde de métal et d'un oxyde d'un élément associé formateur du verre, ladite couche étant résistante aux agents chimiques, tout en formant barrière au plomb dans les conditions usuelles d'utilisation.

2. Récipient selon la revendication 1, caractérisé en ce que l'oxyde métallique est choisi parmi le dioxyde de zirconium et/ou le dioxyde de titane.

3. Récipient selon la revendication 1, caractérisé en ce que l'oxyde de l'élément associé formateur du verre est choisi parmi l'anhydride phosphorique (P₂O₅), le sesquioxyde de bore (B₂O₃), le sesquioxyde d'aluminium (Al₂O₃), le dioxyde de silicium (SiO₂), de préférence l'anhydride phosphorique.

4. Récipient selon l'une des revendications 1 à 3, caractérisé en ce que le rapport en pourcentage en mole de l'oxyde de métal par rapport au mélange total est compris entre 30 et 80 %.

5. Récipient selon l'une des revendications 1 à 4, caractérisé en ce que la couche comporte jusqu'à 10 % en mole par rapport au mélange total d'un élément modificateur choisi de préférence parmi le le sodium, le potassium, le calcium, le magnésium.

6. Récipient selon l'une des revendications 1 à 5, caractérisé en ce que la couche a une épaisseur comprise entre 0,5 et 1,5 micromètre.

7. Récipient selon l'une des revendications 1 à 6, caractérisé en ce que la couche résulte de la transformation d'un précurseur organométallique et d'un précurseur de l'oxyde de l'élément formateur associé et éventuellement d'un précurseur organique de l'élément modificateur.

8. Récipient selon l'une des revendications 1 à 7, caractérisé en ce que la couche barrière comprend en outre un élément susceptible de répondre à une excitation fluorescente telle qu'une terre rare, rendant aisée la détection de la présence de ladite couche.

9. Procédé de réalisation d'un article de verre comportant du plomb notamment un récipient en cristal de plomb, caractérisé en ce qu'on dépose sur la surface destinée à entrer en contact avec un corps extérieur, une mince couche selon l'une des revendications 1 à 8, faisant obstacle à la migration du plomb contenu dans le cristal vers le contenu du récipient.

10. Procédé selon la revendication 9, caractérisé en ce qu'une solution de précurseurs organométalliques de l'oxyde de métal, de précurseurs organiques de l'oxyde de l'élément formateur associé, éventuellement de précurseurs de l'élément modificateur, sous forme d'aérosol, est pyrolysée sur un substrat en cristal de plomb convenablement chauffé.

11. Procédé selon la revendication 10, caractérisé en ce que le substrat est chauffé à une température supérieure à 400°C et de préférence comprise entre 400 et 550°C.
